# EUROPEAN PATENT APPLICATION

(11) **EP 4 420 777 A1**
(43) Date of publication of application: **28.08.2024**
(21) Application number: 24155192.8
(22) Date of filing: 01.02.2024
(51) Int. Cl.: B01J 23/63, B01J 35/00, B01J 35/30, B01J 37/02, B01D 53/94

(54) **CATALYST ARTICLE WITH HIGH LOCAL RHODIUM CONCENTRATION ON CERIA-ZIRCONIA, EMISSION TREATMENT SYSTEM CONTAINING AND EXHAUST GAS TREATMENT METHOD USING SAID CATALYST ARTICLE**

(30) Priority: 22.02.2023 US 202363486304 P
(71) Applicant: Johnson Matthey Public Limited Company, London EC4A 4AB (GB)
(72) Inventor: LIU, Dongxia, Wayne, 19087 (US)
(74) Representative: Boult Wade Tennant LLP

(57) **Abstract**

The present invention provides a catalyst article for treating exhaust gas comprising: a substrate comprising an inlet end and an outlet end with an axial length L; a first catalytic region comprising support material particles; at least some of the support material particles are rhodium-supporting support material particles having rhodium supported thereon at a concentration of from 0.001 to 3.5 wt.%, based on the weight of the rhodium-supporting support material particle; and the rhodium is present at a loading of up to 20 g/ft³ relative to the first catalytic region.

## Description

### FIELD OF THE INVENTION

The invention relates to a catalyst article, an emission treatment system and a method of treating an exhaust gas.

### BACKGROUND OF THE INVENTION

A three-way catalyst (TWC) allows simultaneous conversions (-98%) of CO, HCs and NOₓ from gasoline engine exhaust to innocuous compounds at stoichiometric air-to-fuel ratio. Specifically, the oxidation of CO and HCs to CO₂ and steam (H₂O) is mainly catalyzed by Pd, while the reduction of NOₓ to N₂ is mainly catalyzed by Rh. Modern TWCs use supported platinum group metal (hereinafter "PGM") catalysts (Pd, Rh, Pt, *etc.*) deposited on a single, double or multilayer support, with the support material consisting of metal oxides with high specific surface area, primarily stabilized alumina and ceria-containing oxygen storage materials. The supported catalyst is washcoated on a ceramic monolithic substrate.

With the PGM price substantially increasing in recent years and the emission regulation restrictions becoming stricter, there is a need to reduce the usage of precious metals used in exhaust gas purification catalysts. Among the noble metals, Rh is the scarcest in the planet and the most expensive species. Thus, making Rh, in particular, highly activated is desired in order to reduce the cost of PGM usage, while still coping with tightened emission control regulations.

In Rh TWC washcoat, Rh is either dispersed on stabilized alumina support or ceria-containing oxygen storage material support or a blend of both. It is well known that deactivation of Rh TWC catalysts after high temperature ageing is mainly due to the Rh metal and support material sintering. However, in certain TWC catalysts with lower Rh loading (*e.g.,* < 20 g/ft³), Rh atom or clusters are formed, which are prone to be "dissolved" into the support material due to strong metal support interaction (SMSI), leading to deteriorated catalytic performance with fewer active Rh sites. Ceria has high surface energy, which favors strong metal-support interaction when Rh is dispersed on ceria-zirconia mixed oxide support. Strong interaction between Rh and Ce could suppress Rh sintering, which is advantageous for catalytic performance. However, Ce could also "decorate" Rh surface if Ce content is too high, covering active Rh sites, which is detrimental for activity. Therefore, an optimal ceria content is needed to maintain the ideal Rh-Ce interaction. Generally, a 20% ceria-contenting ceria zirconia mixed oxide is used as Rh support.

Despite the recent TWC development, there is still a need for improved TWC catalyst with more active Rh sites at lower Rh loading. This invention solves these problems amongst others.

### SUMMARY OF THE INVENTION

One aspect of the present disclosure is directed to provides a catalyst article for treating exhaust gas comprising: a substrate comprising an inlet end and an outlet end with an axial length L; a first catalytic region comprising support material particles; at least some of the support material particles are rhodium-supporting support material particles having rhodium supported thereon at a concentration of from 0.001 to 3.5 wt.%, based on the weight of the rhodium-supporting support material particle; the rhodium is present at a loading of up to 20 g/ft³ relative to the first catalytic region; the support material particles comprise a ceria-zirconia mixed oxide; and wherein the ceria-zirconia mixed oxide has a ceria content of at least 20 wt.%.

The invention also encompasses an emission treatment system comprising the catalyst article described herein and a method of treating an exhaust gas, the method comprising: providing the catalyst article described herein; and contacting the catalyst article with an exhaust gas.

### BRIEF DESCRIPTION OF THE DRAWINGS

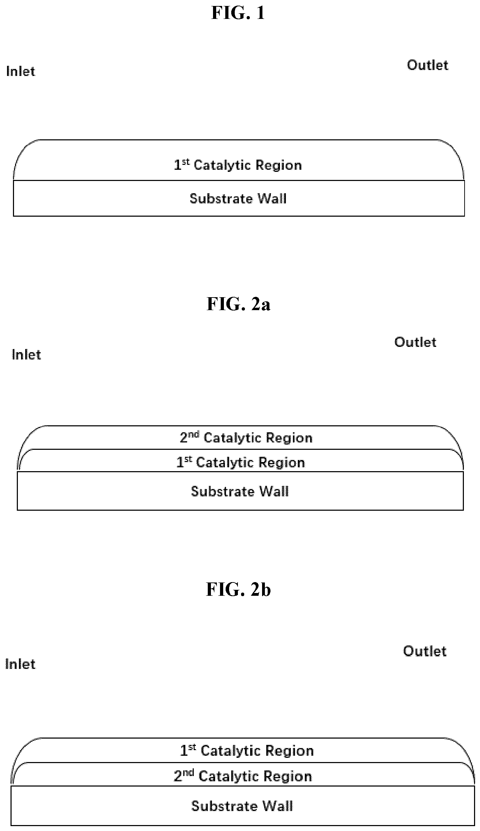

**FIG. 1** shows one embodiment according to the present invention, which contains first catalytic region with a length of 100% to the axial length L of the substrate (single layer).
**FIG. 2a** shows one embodiment according to the present invention, the first catalytic region extends 100% of the axial length L, as bottom layer; the second catalytic region extends 100% of the axial length L, as top layer. **FIG. 2b** depicts a variation of **FIG. 2a****.**

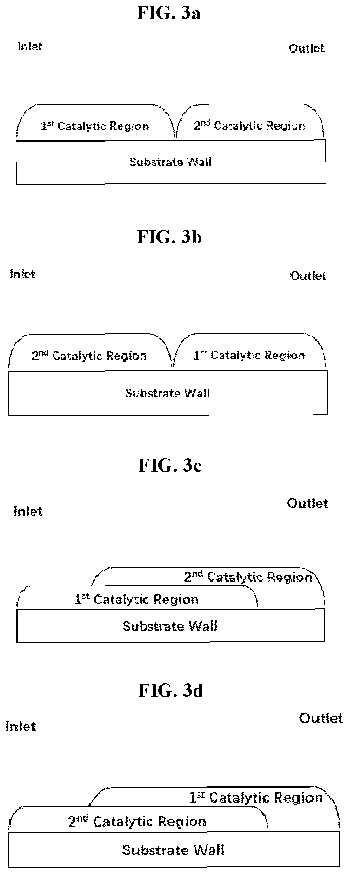

**FIG. 3a** shows one embodiment according to the present invention, the first catalytic region extends less than 100% of the axial length L, from the inlet end; the second catalytic region extends less than 100% of the axial length L, from the outlet end. The total length of the second and the first catalytic region is equal or less than the axial length L. **FIG. 3b** depicts a variation of **FIG. 3a****.**
**FIG. 3c** shows one embodiment according to the present invention, the first catalytic region extends less than 100% of the axial length L, from the inlet end; the second catalytic region extends less than 100% of the axial length L, from the outlet end. The total length of the second and the first catalytic region is greater than the axial length L. **FIG. 3d** depicts a variation of **FIG. 3c****.**

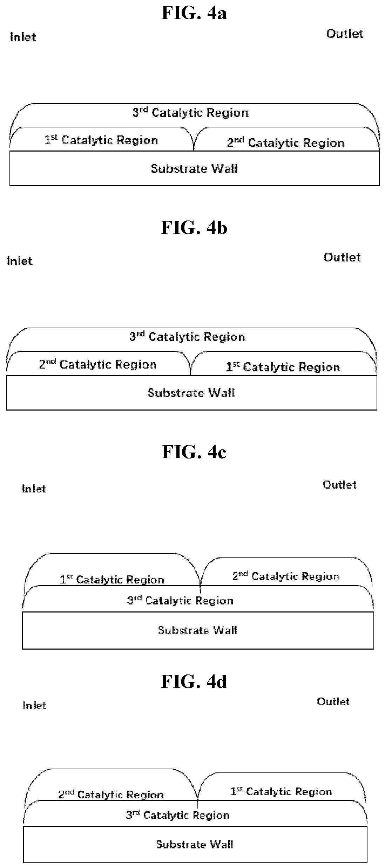

**FIG. 4a** shows one embodiment according to the present invention, the first catalytic region extends less than 100% of the axial length L, from the inlet end; the second catalytic region extends less than 100% of the axial length L, from the outlet end. The total length of the second and the first catalytic region is less than or equal to the axial length L. The 3^{rd} catalytic region extends 100% of the axial length L and overlies the first and second catalytic regions as top layer. **FIG. 4b** depicts a variation of **FIG. 4a****.**
**FIG. 4c** shows one embodiment according to the present invention, the 3^{rd} catalytic region extends 100% of the axial length L as bottom layer. The first catalytic region extends less than 100% of the axial length L, from the inlet end; the second catalytic region extends less than 100% of the axial length L, from the outlet end. The total length of the second and the first catalytic region is less than or equal to the axial length L. **FIG. 4d** depicts a variation of **FIG. 4c****.**

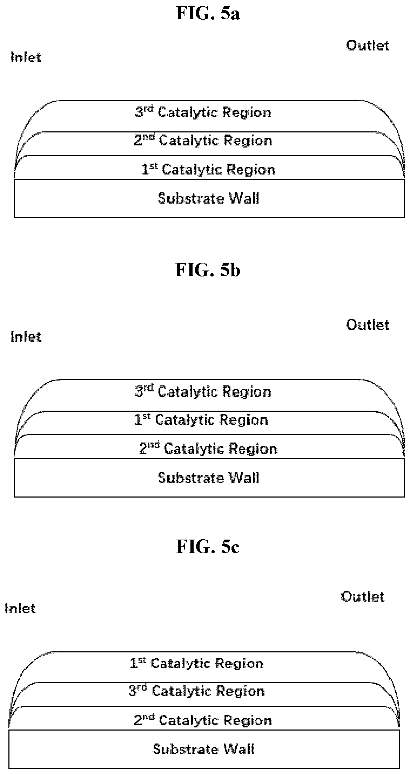

**FIG. 5**a shows one embodiment according to the present invention, the first catalytic region extends 100% of the axial length L, as bottom layer; the second catalytic region extends 100% of the axial length L, as middle layer; and the third catalytic region extends 100% of the axial length L, as top layer. **FIG. 5b** and **5c** depict variations of **FIG. 5a****.**

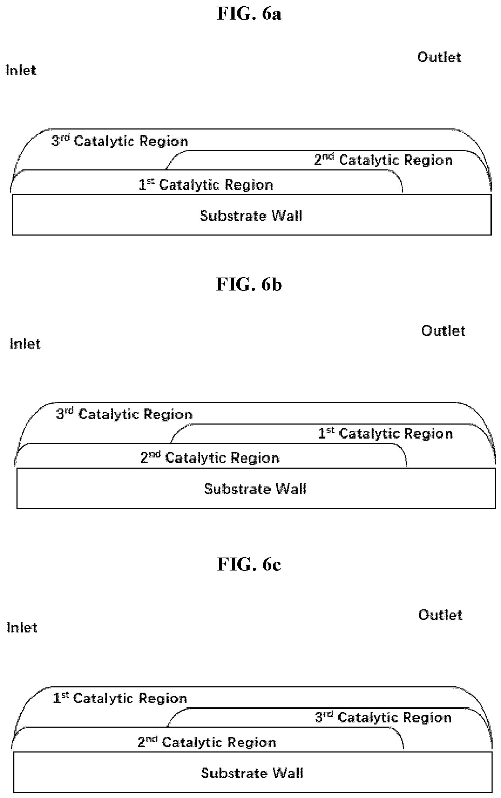

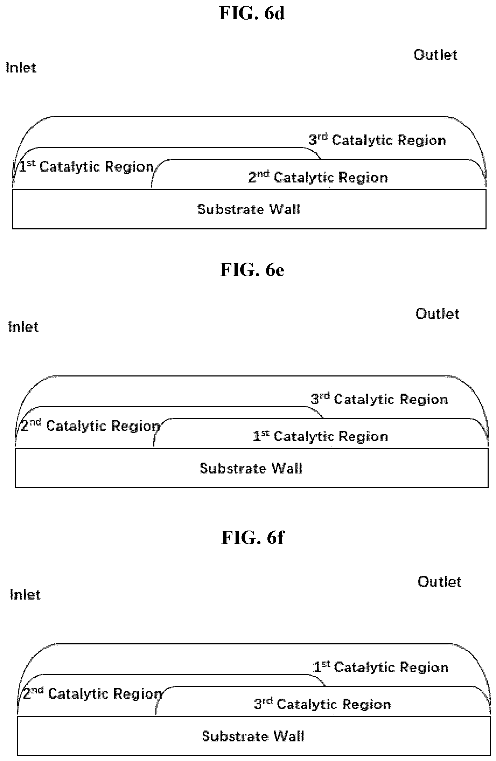

**FIG. 6a** shows one embodiment according to the present invention, the first catalytic region extends less than 100% of the axial length L, from the inlet end; the second catalytic region extends less than 100% of the axial length L, from the outlet end. The total length of the second and the first catalytic region is greater than the axial length L. The 3^{rd} catalytic region extends 100% of the axial length L and overlies the first and second catalytic regions as top layer. **FIGs. 6b-6f** depict variations of **FIG. 6a****.**

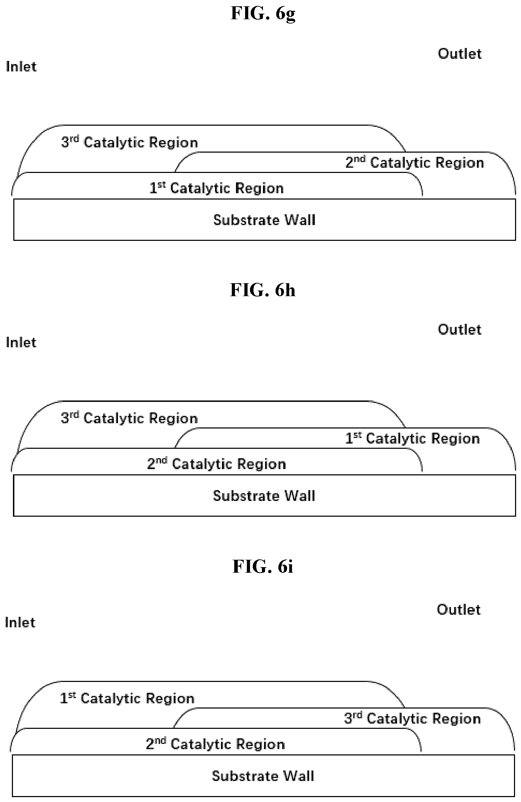

**FIG. 6g** shows one embodiment according to the present invention, the first catalytic region extends less than 100% of the axial length L, from the inlet end; the second catalytic region extends less than 100% of the axial length L, from the outlet end. The total length of the second and the first catalytic region can be less than, equal to, or greater than the axial length L. The 3^{rd} catalytic region extends less than 100% of the axial length L from the inlet end and at least partially overlies the first and/or second catalytic regions. **FIGs. 6h** and **6i** depict variations of **FIG. 6g****.**

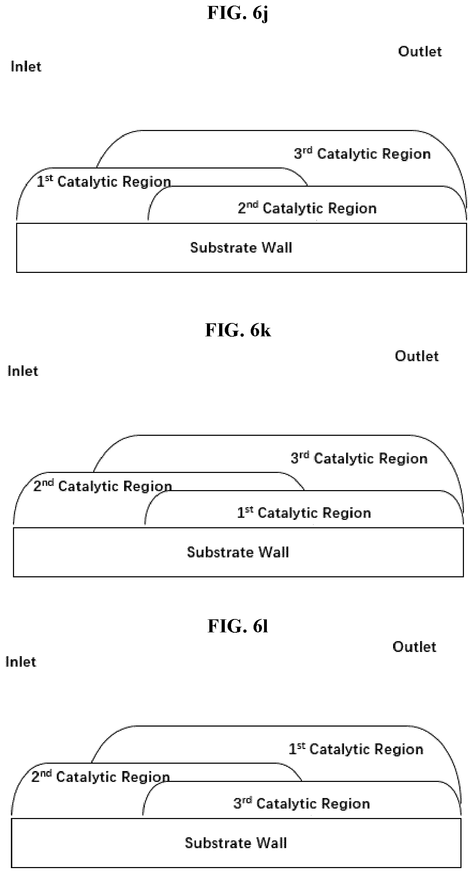

**FIG. 6j** shows one embodiment according to the present invention, the first catalytic region extends less than 100% of the axial length L, from the inlet end; the second catalytic region extends less than 100% of the axial length L, from the outlet end. The total length of the second and the first catalytic region can be less than, equal to, or greater than the axial length L. The 3^{rd} catalytic region extends less than 100% of the axial length L from the outlet end and at least partially overlies the second and/or first catalytic regions. **FIGs. 6k** and 6l depict variations of **FIG. 6j****.**

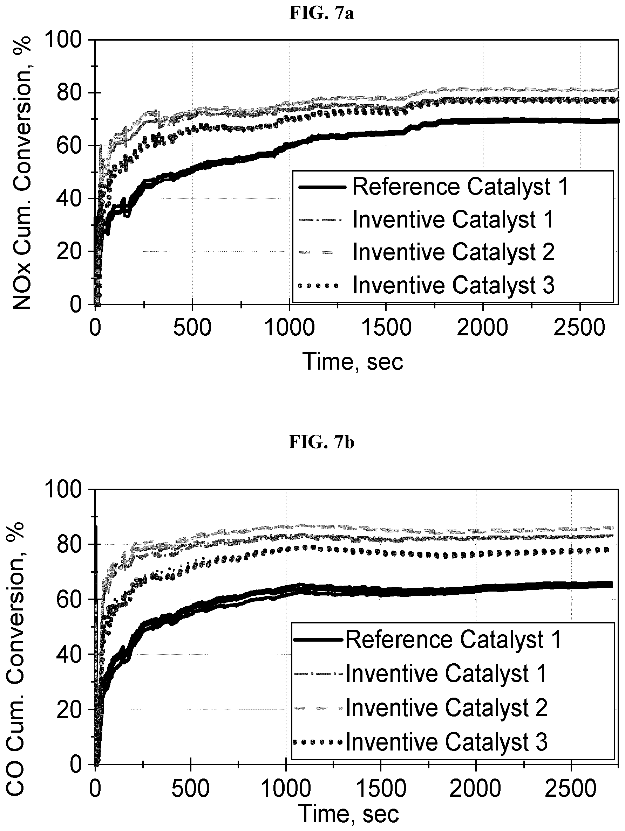

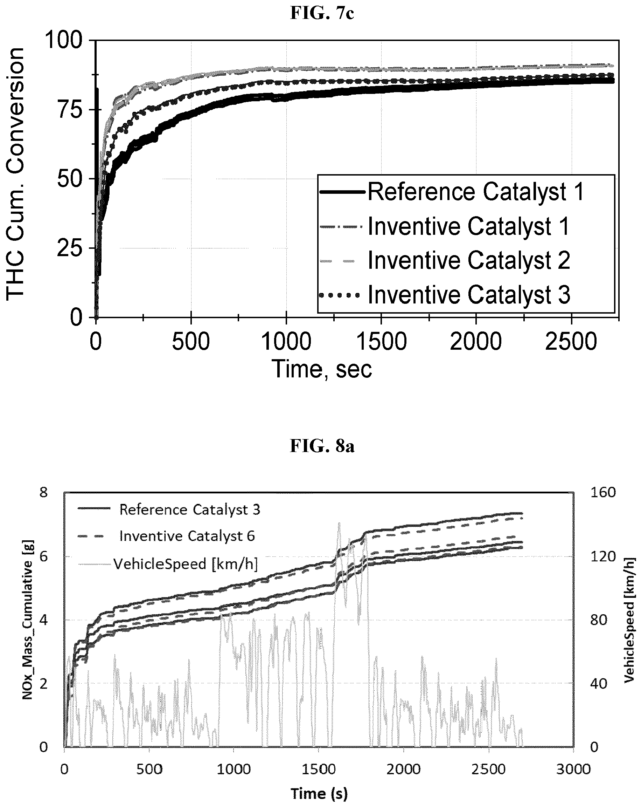

**FIG. 7a** shows NOₓ cumulative conversion of Reference Catalyst 1 and Inventive Catalysts 1-3 during hot RDE cycle; **FIG. 7b** shows CO cumulative conversion of Reference Catalyst 1 and Inventive Catalysts 1-3 during hot RDE cycle; and **FIG. 7c** shows THC cumulative conversion of Reference Catalyst 1 and Inventive Catalysts 1-3 during hot RDE cycle.

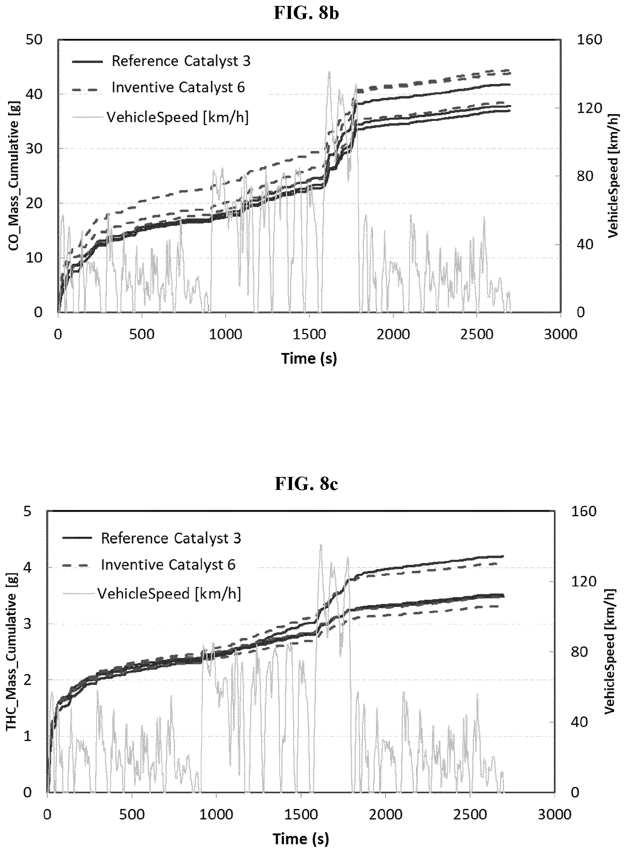

**FIG. 8a** shows NOₓ emission of Reference Catalyst 3 and Inventive Catalyst 6 during cold RDE cycle; **FIG. 8b** shows CO emission of Reference Catalyst 3 and Inventive Catalyst 6 during cold RDE cycle; and **FIG. 8c** shows THC emission of Reference Catalyst 3 and Inventive Catalyst 6 during cold RDE cycle.

### DETAILED DESCRIPTION OF THE INVENTION

The present invention seeks to tackle at least some of the problems associated with the prior art or at least to provide a commercially acceptable alternative solution thereto.

In a first aspect, the present invention provides a catalyst article for treating exhaust gas comprising:
a substrate comprising an inlet end and an outlet end with an axial length L;
a first catalytic region comprising support material particles;
at least some of the support material particles are rhodium-supporting support material particles having rhodium supported thereon at a concentration of from 0.001 to 3.5 wt.%, based on the weight of the rhodium-supporting support material particle;
the rhodium is present at a loading of up to 20 g/ft³ relative to the first catalytic region;
the support material particles comprise a ceria-zirconia mixed oxide; and wherein the ceria-zirconia mixed oxide has a ceria content of at least 20 wt.%.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

### First Catalytic Region

Preferably, the rhodium-supporting support material particles have rhodium supported thereon at a concentration of from 0.3 to 3.5 wt.%, based on the weight of the rhodium-supporting support material particle. More preferably, the rhodium-supporting support material particles have rhodium supported thereon at a concentration of from 0.4 to 3.0 wt.%, even more preferably from 0.4 to 2.0 wt.%, still more preferably from 0.4 to 1.5 wt.%, based on the weight of the rhodium-supporting support material particle. Alternatively, the rhodium-supporting support material particles have rhodium supported thereon at a concentration of from 0.3 to 1.8 wt.%, even more preferably from 0.4 to 1.2 wt.%, still more preferably from 0.4 to 1.0 wt.%, based on the weight of the rhodium-supporting support material particle.

In known catalyst articles, when rhodium is present at the relatively low loading of up to 20 g/ft³ relative to the first catalytic region, the support material particles having rhodium supported thereon may not have as high a concentration of rhodium supported thereon as required in the present aspect. This may be because the rhodium is typically evenly supported, i.e. at a uniform concentration, on each support material particle present in a particular catalyst region. In other words, none of the support material particles having rhodium supported thereon may have a locally higher concentration of rhodium.

However, through intense research, inventor has surprisingly discovered when initial Rh particles are large enough (e.g., having a locally higher Rh concentration), higher ceria-containing (> 20%) ceria zirconia mixed oxide (CZO) material is a better Rh support with less Rh dissolving concern. Higher ceria containing CZO material has more oxygen storage capacity in general, which could provide catalytic performance merits in high space velocity and drastic lambda swing conditions within the transient testing cycle.

The term "catalyst article" used herein may encompass an article in which a catalyst is supported thereon or therein. The article may take the form of, for example, a honeycomb monolith, or a filter, e.g. a wall flow filter or a flow-through filter.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art.

The term "catalyst region" as used herein may encompass an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

It is preferable that the "catalyst region" has a substantially uniform composition (i.e. there is no substantial difference in the composition of the washcoat when comparing one part of the region with another part of that region, on average). Substantially uniform composition in this context refers to a material (e.g., region) where the difference in composition when comparing one part of the region with another part of the region is 5% or less, usually 2.5% or less, and most commonly 1% or less.

The first catalyst region is preferably disposed on the substrate. The term "disposed on" in the context of this aspect may encompass both having the catalyst region directly disposed on the substrate, i.e. with no intervening material, and/or indirectly disposed on the substrate, i.e. with intervening material. If the substrate is porous, then the term "disposed on" may also encompass having the catalyst region disposed therein, for example within the pores of the substrate, i.e. wherein the catalyst region is disposed thereon and/or therein.

The term "washcoat" as used herein is well-known in the field and refers to an adherent coating that is applied to a substrate usually during the production of a catalyst. Preferably, the first catalyst region is a washcoat layer.

In the context of the present invention, "rhodium-supporting support material particles" are support material particles that have rhodium supported thereon. The term "supported thereon" in this context means that the rhodium, typically in the form of nanoparticles, is directly in contact, and physical and/or chemically bound to the surface of the support material. The term "surface of the support material" may encompass the surface of the pores within a porous support material.

Preferably, the rhodium is not alloyed with another metal.

Preferably, the rhodium-supporting support material particles are substantially evenly dispersed throughout the first catalyst region. In this context the term "substantially evenly dispersed" may encompass that the concentration of rhodium-supporting support material particles in one arbitrary sub-region of the first catalyst region is substantially the same as the concentration of rhodium-supporting support material particles in a different arbitrary sub-region of the first catalyst region, such as within 5%, within 3%, within 2% and preferably within 1% of the concentration.

At least some of the support material particles are rhodium-supporting support material particles having rhodium supported thereon at a concentration of from 0.001 to 3.5 wt.%, based on the weight of the rhodium-supporting support material particle. By "based on the weight of the rhodium-supporting support material particle", it is meant that the weight of the rhodium is from 0.001 to 3.5 % of the weight of the support material particle (e.g. alumina powder grain). In other words, the term "wt.%" relates to the weight of the support material particle, rather than the total weight of the support material particle and the rhodium. Preferably, the rhodium-supporting support material particles have rhodium supported thereon at a concentration of from 0.3 to 3.5 wt.%, more preferably from 0.4 to 3.0 wt.%, even more preferably from 0.4 to 2.0 wt.%, still more preferably from 0.4 to 1.8 wt.%, yet still more preferably from 0.4 to 1.6 wt.%, yet still more preferably from 0.4 to 1.5 wt.%, based on the weight of the rhodium-supporting support material particle. For example, the rhodium-supporting support material particles preferably have rhodium supported thereon at a concentration of from 0.4 to 1.3 wt.%, based on the weight of the rhodium-supporting support material particle. In an alternative preferred embodiment, the rhodium-supporting support material particles have rhodium supported thereon at a concentration of from 0.4 to 1.8 wt.%, based on the weight of the rhodium-supporting support material particle. It will be appreciated that the invention may encompass preferred sub-ranges made out of combining any of the above-described end points.

Without wishing to be bound by theory, it is thought that maintaining a similar amount of total support material compared to a conventional catalyst region not having locally-concentrated rhodium-supporting support materials, but evenly-distributed, low-concentration rhodium, may enable the thermal durability properties of the support material, such as alumina, to be maintained. Thus, it is preferred that at least some of the support material particles are non-supporting support material particles having essentially no rhodium supported thereon, preferably having no rhodium supported thereon. In the context of the present invention, "non-supporting support material particles" are support material particles that have essentially no rhodium supported thereon, preferably having no rhodium supported thereon.

The term "essentially no rhodium" as used herein may encompass that the non-supporting support material particles have rhodium supported thereon at a concentration of less than 0.001 wt.%, preferably less than 0.0005 wt.%, more preferably less than 0.0001 wt.%, based on the weight of the rhodium-supporting support material particle. In other words, preferably the amount of rhodium supported on the non-supporting support material particles is negligible. However, it will be appreciated that, in practice, under the high-temperature conditions of the intended use of such a catalyst article, small amounts of rhodium may migrate from the rhodium-supporting support material particles to the non-supporting support material particles. To a certain extent, this may be unavoidable within technical limitations. Thus, the invention is intended to encompass unavoidable amounts of rhodium being supported on the non-supporting support material particles.

In addition, without wishing to be bound by theory it is also thought that the presence of the non-supporting support material particles may provide a physical barrier and/or create further distance between rhodium-supporting support material particles, such that the likelihood of sintering and coalescence of rhodium nanoparticles on different rhodium-supporting support material particles may be reduced, for example when the catalyst article is subjected to ageing conditions. Such advantages may not be achieved by simply reducing the amount of total support material in a known catalyst, while maintaining the same amount of rhodium, in order to achieve higher rhodium concentration on every support material particle (i.e. having 100% rhodium-supporting support material particles in the first catalyst region, based on the total amount of the support material in the first catalyst region).

Preferably, from 5 to 80% of the support material particles in the first catalyst region are rhodium-supporting support material particles. In other words, from 5 to 80% of the rhodium-supporting support material particles and non-supporting support material particles in the first catalyst region are rhodium-supporting support material particles. The % in this context is simply the number percentage, which can be measured by TEM or any other suitable means. More preferably, from 7 to 60%, even more preferably from 10 to 50%, still more preferably from 11 to 45%, yet still more preferably from 13 to 40%, and yet still more preferably from 15 to 35% of the support material particles in the first catalyst region are rhodium-supporting support material particles. For example, preferably from 10 to 25% of the support material particles in the first catalyst region are rhodium-supporting support material particles. In an alternative preferred embodiment, from 20 to 35% of the support material particles in the first catalyst region are rhodium-supporting support material particles.

Without wishing to be bound by theory, it is thought that having rhodium supported on only a small percentage of the support material particles, compared to catalyst articles of a similar rhodium loading but having rhodium supported on all support material particles, may result in an improved catalyst article having improved light-off performance and resistance to sintering for the reasons hypothesised herein.

Preferably, the support material particles, i.e. the support material particles of the first catalyst region, consist essentially of the rhodium-supporting support material particles and the non-supporting support material particles. In other words, the rhodium-supporting support material particles and the non-supporting support material particles preferably make up 90 wt.% or more of the support material particles, more preferably 95 wt.% or more, even more preferably 97 wt.% or more, still more preferably 99 wt.% or more of the support material particles. Most preferably, the support material particles, i.e. the support material particles of the first catalyst region, consist of the rhodium-supporting support material particles and the non-supporting support material particles.

Preferably, the first catalyst region consists of the rhodium-supporting support material particles, the non-supporting support material particles, and optionally a binder. In some preferred embodiments, the ceria-zirconia mixed oxide has a ceria content of 20-45 wt.%. In further preferred embodiments, the ceria-zirconia mixed oxide has a ceria content of 20-40 wt.%, 25-40 wt.%, or even 25-35 wt.%.

Preferably, the ceria-zirconia mixed oxide is doped, preferably wherein the ceria-zirconia mixed oxide is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium and yttrium. Preferably, the dopant is present in the ceria-zirconia mixed oxide in an amount of from 0.001 wt.% to 20 wt.%, more preferably from 0.5 wt.% to 10 wt.%. The wt.% may be based on the total weight of the ceria-zirconia mixed oxide.

Preferably, the support material particles have a D₉₀ of from 0.1 to 25 µm, preferably from 0.5 to 5 µm. The term "D₉₀" as used herein may encompass the value in the size distribution, up to and including which, 90% of the total volume of material in the sample is 'contained'. The D₉₀ may be measured using any suitable technique, such as dynamic light scattering.

Preferably, the rhodium is present at a loading of from 1 to 20 g/ft³ relative to the first catalytic region (e.g., especially when the first catalytic region extends less than the full length L of the substrate, such as 20 to 80%, 30 to 70%, or 40 to 60% of the full length L), more preferably from 2 to 18 g/ft³, even more preferably from 3 to 16 g/ft³, still more preferably from 4 to 16 g/ft³. Alternatively, the rhodium is present at a loading of from 1 to 20 g/ft³ relative to the first catalytic region (*e.g.,* especially when the first catalytic region extends for the full length of the substrate), more preferably from 2 to 15 g/ft³, even more preferably from 3 to 10 g/ft³, still more preferably from 4 to 10 g/ft³. The benefits described herein may be particularly strong at such low loadings. Moreover, such low loadings are in line with the general desired direction in the field to reduce PGM usage.

Preferably, the support material particles are present at a loading of from 0.5 to 3 g/in³ relative to the first catalytic region. Methods of calculation of such loadings are well-known to those skilled in the art. More preferably, the support material particles are present at a loading of from 0.5 to 2 g/in³, even more preferably from 0.6 to 2 g/in³, still more preferably from 0.75 to 2 g/in³, even more preferably from 0.8 to 2 g/in³ relative to the first catalytic region. In some preferred embodiments, the support material particles are present at a loading of about 1 g/in³ relative to the first catalytic region. Such a loading may be particularly suitable for obtaining the advantages described herein at the particular rhodium loadings required by the claims.

Preferably, the first catalyst region further comprises a first inorganic oxide. The first inorganic oxide is preferably an oxide of Groups 2, 3, 4, 5, 13 and 14 elements. The first inorganic oxide is preferably selected from the group consisting of alumina, magnesia, silica, zirconia, barium oxides, and mixed oxides or composite oxides thereof. Particularly preferably, the first inorganic oxide is alumina, lanthanum-alumina, zirconia, or a magnesia/alumina composite oxide. One especially preferred first inorganic oxide is alumina or lanthanum-alumina.

Preferably, the first catalyst region further comprises a binder, preferably wherein the binder comprises a further alumina species, such as alumina, preferably gamma alumina, more preferably lanthanum-doped gamma alumina, such as 4%La-Al₂O₃. The binder is preferably present in an amount of from 0.5 to 2 g/in³ relative to the substrate, more preferably about 1.0 g/in³. The presence of such an additional binder may be particularly suitable when the first catalyst region is a washcoat layer, for example.

The catalyst article preferably further comprises one or more further catalyst regions. The one or more further catalyst regions may be different to the catalyst region described herein and required by the invention. For example, the one or more further catalyst regions may be any suitable further catalyst region known to the skilled person. In particular, it is preferred that the one or more further catalyst regions comprise one or more catalyst regions for three-way catalysis. Preferably, one or more of the further catalyst regions comprise platinum and/or palladium. The platinum and/or palladium may be supported on a support material. Suitable support materials are known in the art.

### Second Catalytic Region

The catalytic article may further comprise a second catalytic region.

The second catalytic region can further comprise a second PGM component, a second oxygen storage capacity (OSC) material, a second alkali or alkaline earth metal component, and/or a second inorganic oxide.

The second PGM component can be selected from the group consisting of platinum, palladium, rhodium, and a mixture thereof. In some embodiments, the second PGM component can be Pd, Rh or a mixture thereof.

The second OSC material can be cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material may further comprise one or more of dopants like lanthanum, neodymium, praseodymium, yttrium *etc.* Moreover, the second OSC material may have the function as a support material for the second PGM component. In some embodiments, the second OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second OSC material (*e.g.,* ceria-zirconia mixed oxide) can be from 10 to 90 wt.%; preferably, 25-75 wt.%; more preferably, 30-60 wt.%, based on the total washcoat loading of the second catalytic region.

The second OSC material loading in the second catalytic region can be less than 2 g/in³. In some embodiments, the second OSC material loading in the second catalytic region is no greater than 1.5 g/in³, 1.2 g/in³, 1 g/in³, 0.8 g/in³, or 0.7 g/in³.

The second alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the second catalytic region.

It is even more preferable that the second alkali or alkaline earth metal is strontium. The strontium, where present, is preferably present in an amount of 0.1 to 15 wt.%, and more preferably 3 to 10 wt.%, based on the total weight of the second catalytic region.

It is also preferable that the second alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the second catalytic region. It is more preferable that the second alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthanum-alumina, zirconia, or a magnesia/alumina composite oxide. One especially preferred second inorganic oxide is alumina or lanthanum-alumina.

The second OSC material and the second inorganic oxide can have a weight ratio of no greater than 10:1; preferably, no greater than 8:1 or 5: 1; more preferably, no greater than 4:1 or 3: 1; most preferably, no greater than 2: 1.

Alternatively, the second OSC material and the second inorganic oxide can have a weight ratio of 10:1 to 1:10; preferably, 8:1 to 1:8 or 5:1 to 1:5; more preferably, 4:1 to 1:4 or 3: 1 to 1:3; and most preferably, 2: 1 to 1:2.

In some embodiments, the second OSC material and the second inorganic oxide can have a weight ratio of no less than 2:1. In further embodiments, the second OSC material and the second inorganic oxide can have a weight ratio of no less than 10:1. In another further embodiments, the second OSC material and the second inorganic oxide can have a weight ratio of no less than 20:1 or no less than 30:1. In yet another further embodiments, the second OSC material and the second inorganic oxide can have a weight ratio of no less than 40:1 or no less than 50: 1.

The total washcoat loading of the second catalytic region can be less than 3.5 g/in³; preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.5 g/in³.

The second catalytic region can extend for 100 percent of the axial length L. (*E.g., see* **FIGs. 2a, 2b****,** and **6a****-6c**)

The second catalytic region can extend for 30 to 70 percent of the axial length L. Preferably, for 40 to 60 percent, more preferably, 45 to 55 percent of the axial length L. and most preferably, the total length of the second region and the first region is equal or greater than the axial length L (*E.g., see* FIGs. 3a-5d and **7a-71**)**.**

The second catalytic region can overlap with the first catalytic region for 0.1 to 99 percent of the axial length L (*e.g., see* **FIGs. 3c** and **3d****,** the first catalytic region can overlie the second catalytic region or the second catalytic region can overlie the first catalytic region). Alternatively, the total length of the second catalytic region and the first catalytic region can equal to the axial length L (*e.g., see* **FIGs. 3a** and **3b**)**.** In yet another alternative, total the length of the second catalytic region and the first catalytic region can be less than the axial length L, for example, no greater than 95%, 90%, 80%, or 70% of the axial length L.

In some embodiments, the first catalytic region can be supported/deposited directly on the substrate. In certain embodiments, the second catalytic region can be supported/deposited directly on the substrate.

### Third Catalytic Region

The catalytic article may further comprise a third catalytic region.

The third catalytic region can further comprise a third PGM component, a third oxygen storage capacity (OSC) material, a third alkali or alkaline earth metal component, and/or a third inorganic oxide.

The third PGM component can be selected from the group consisting of platinum, palladium, rhodium, and a mixture thereof. In some embodiments, the third PGM component can be Pd, Rh or a mixture thereof.

The third OSC material can be cerium oxide, zirconium oxide, a ceria-zirconia mixed oxide, an alumina-ceria-zirconia mixed oxide, or a combination thereof. More preferably, the third OSC material comprises the ceria-zirconia mixed oxide, the alumina-ceria-zirconia mixed oxide, or a combination thereof. In addition, the third OSC material may further comprise one or more of dopants like lanthanum, neodymium, praseodymium, yttrium *etc.* Moreover, the third OSC material may have the function as a support material for the third PGM component. In some embodiments, the third OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 75:25. Alternatively, the ceria-zirconia mixed oxide also can have a weight ratio of ceria to zirconia less than 50:50; preferably, less than 40:60; more preferably, less than 25:75.

The third OSC material (e.g., ceria-zirconia mixed oxide) can be from 10 to 90 wt.%; preferably, 25-75 wt.%; more preferably, 30-60 wt.%, based on the total washcoat loading of the third catalytic region.

The third OSC material loading in the third catalytic region can be less than 1.5 g/in³. In some embodiments, the third OSC material loading in the second catalytic region is no greater than 1.2 g/in³, 1.0 g/in³, 0.9 g/in³, 0.8 g/in³, or 0.7 g/in³.

The total washcoat loading of the third catalytic region can be less than 3.5 g/in³; preferably, no more than 3.0 g/in³, 2.5 g/in³, or 2 g/in³.

The third alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the third catalytic region.

It is even more preferable that the third alkali or alkaline earth metal is strontium. The strontium, where present, is preferably present in an amount of 0.1 to 15 wt.%, and more preferably 3 to 10 wt.%, based on the total weight of the third catalytic region.

It is also preferable that the third alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the third catalytic region. It is more preferable that the third alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The third inorganic oxide is preferably an oxide of Groups 2, 3, 4, 5, 13 and 14 elements. The third inorganic oxide is preferably selected from the group consisting of alumina, magnesia, silica, zirconia, barium oxides, and mixed oxides or composite oxides thereof. Particularly preferably, the third inorganic oxide is alumina, lanthanum-alumina, zirconia, or a magnesia/alumina composite oxide. One especially preferred third inorganic oxide is alumina or lanthanum-alumina.

The third OSC material and the third inorganic oxide can have a weight ratio of no greater than 10:1; preferably, no greater than 8:1 or 5: 1; more preferably, no greater than 4:1 or 3: 1; most preferably, no greater than 2: 1.

Alternatively, the third OSC material and the third inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2: 1 to 1:2.

In some embodiments, the third OSC material and the third inorganic oxide can have a weight ratio of no less than 2: 1. In further embodiments, the third OSC material and the third inorganic oxide can have a weight ratio of no less than 10:1. In another further embodiments, the third OSC material and the third inorganic oxide can have a weight ratio of no less than 20:1 or no less than 30:1. In yet another further embodiments, the third OSC material and the third inorganic oxide can have a weight ratio of no less than 40: 1 or no less than 50:1.

The third catalytic region can extend for 100 percent of the axial length L (*e.g., see* **FIGs. 4a-4d** and **6a-6c**).

The third catalytic region can be less than the axial length L, for example, no greater than 95%, 90%, 80%, or 70% of the axial length L (*e.g., see* FIGs. 5a-5d and **7g-7l**).

The second catalytic region can overlap with the first catalytic region for 0.1 to 99 percent of the axial length L (*e.g., see* FIGs. 7a-71, the first catalytic region can overlie the second catalytic region, or the second catalytic region can overlie the first catalytic region). Alternatively, the either of second or first region can extend for 30 to 70 percent of the axial length L. Preferably, for 40 to 60 percent, more preferably, 45 to 55 percent of the axial length L. and most preferably, the total length of the second and the first region is equal or less than the axial length L (*e.g., see* **FIGs. 4a-4d**).

Preferably, the catalyst article comprises a substrate, the first catalyst region described herein and a second catalyst region. In other words, the catalyst article preferably further comprises a second catalyst region. The second catalyst region preferably has a different composition to that of the first catalyst region. Preferably, the second catalyst region comprises a PGM supported on a support material, and optionally one or more of a binder and a promoter. The PGM preferably comprises palladium. The support material preferably comprises alumina and/or a ceria zirconia mixed oxide as described herein. The binder preferably comprises alumina. The promoter preferably comprises barium.

The first catalyst region is preferably disposed on, preferably directly on, the second catalyst region. For example, preferably the second catalyst region is disposed directly on the substrate and the first catalyst region is disposed directly on the second catalyst region. In these embodiments, the first and second catalyst regions are preferably washcoat layers, and the washcoat layers are each preferably applied over the entire length of the substrate.

In an alternative preferred embodiment, the catalyst article comprises a substrate, the first catalyst region described herein, a second catalyst region and a third catalyst region. In other words, the catalyst article preferably further comprises a second catalyst region and a third catalyst region. The second and third catalyst regions preferably have different compositions to that of the first catalyst region. Moreover, the second catalyst region preferably has a different composition to that of the third catalyst region.

Preferably, the second catalyst region in this embodiment is as described in the above alternative preferred embodiment. However, in this embodiment the first and third catalyst regions are preferably disposed on, preferably directly on, the second catalyst region in the form of zones. In particular, the second catalyst region is preferably disposed directly on the substrate, and the first and third catalyst regions are preferably each disposed directly on the second catalyst region. The second catalyst region is preferably disposed on the entire length of the substrate and the first and third catalyst regions are preferably disposed in the form of zones on the second catalyst region. In these preferred embodiments, the first, second and third catalyst regions are preferably in the form of washcoat layers.

In these preferred embodiments, the first catalyst region is preferably the rear zone, i.e. located at the intended outlet end of the catalyst article, and the third catalyst region is preferably the front zone, i.e. located at the intended inlet end of the catalyst article.

The third catalyst region preferably comprises rhodium supported on a support material. The rhodium is preferably disposed on all of the support material particles, i.e. as in a standard catalyst region. The support material is preferably alumina and/or a ceria-zirconia mixed oxide as described herein. When the support material of the rhodium-supporting support material particles in the first catalyst region comprises alumina, the support material of the third catalyst region preferably comprises a ceria-zirconia mixed oxide. When the support material of the rhodium-supporting support material particles in the first catalyst region comprises a ceria-zirconia mixed oxide, the support material of the third catalyst region preferably comprises alumina.

When the first and third catalyst regions are zoned, the two zones together are preferably applied over the entire length of the substrate, which is preferably the entire length of the second catalyst region.

Such preferred arrangements of the first, second and optionally third catalyst regions may surprisingly result in improved NOₓ abatement, particularly during cold start conditions, as well as lower light-off temperatures. Improved CO and/or THC abatement may also be observed. Improved aged OSC properties may also be observed.

### Fourth Catalytic Region

The catalytic article may further comprise a fourth catalytic region.

The fourth catalytic region can further comprise a fourth PGM component, a fourth oxygen storage capacity (OSC) material, a fourth alkali or alkaline earth metal component, and/or a fourth inorganic oxide.

The fourth PGM component can be selected from the group consisting of platinum, palladium, rhodium, and a mixture thereof. In some embodiments, the fourth PGM component can be Pd, Rh or a mixture thereof.

The fourth OSC material can be cerium oxide, zirconium oxide, a ceria-zirconia mixed oxide, an alumina-ceria-zirconia mixed oxide, or a combination thereof. More preferably, the fourth OSC material comprises the ceria-zirconia mixed oxide, the alumina-ceria-zirconia mixed oxide, or a combination thereof. In addition, the fourth OSC material may further comprise one or more of dopants like lanthanum, neodymium, praseodymium, yttrium *etc.* Moreover, the fourth OSC material may have the function as a support material for the fourth PGM component. In some embodiments, the fourth OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 75:25. Alternatively, the ceria-zirconia mixed oxide also can have a weight ratio of ceria to zirconia less than 50:50; preferably, less than 40:60; more preferably, less than 25:75.

The fourth OSC material (e.g., ceria-zirconia mixed oxide) can be from 10 to 90 wt.%; preferably, 25-75 wt.%; more preferably, 30-60 wt.%, based on the total washcoat loading of the fourth catalytic region.

The fourth OSC material loading in the fourth catalytic region can be less than 1.5 g/in³. In some embodiments, the fourth OSC material loading in the second catalytic region is no greater than 1.2 g/in³, 1.0 g/in³, 0.9 g/in³, 0.8 g/in³, or 0.7 g/in³.

The total washcoat loading of the fourth catalytic region can be less than 3.5 g/in³; preferably, no more than 3.0 g/in³, 2.5 g/in³, or 2 g/in³.

The fourth alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the fourth catalytic region.

It is even more preferable that the fourth alkali or alkaline earth metal is strontium. The strontium, where present, is preferably present in an amount of 0.1 to 15 wt.%, and more preferably 3 to 10 wt.%, based on the total weight of the fourth catalytic region.

It is also preferable that the fourth alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the fourth catalytic region. It is more preferable that the fourth alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

The fourth inorganic oxide is preferably an oxide of Groups 2, 3, 4, 5, 13 and 14 elements. The fourth inorganic oxide is preferably selected from the group consisting of alumina, magnesia, silica, zirconia, barium oxides, and mixed oxides or composite oxides thereof. Particularly preferably, the fourth inorganic oxide is alumina, lanthanum-alumina, zirconia, or a magnesia/alumina composite oxide. One especially preferred fourth inorganic oxide is alumina or lanthanum-alumina.

The fourth OSC material and the fourth inorganic oxide can have a weight ratio of no greater than 10:1; preferably, no greater than 8:1 or 5: 1; more preferably, no greater than 4:1 or 3: 1; most preferably, no greater than 2: 1.

Alternatively, the fourth OSC material and the fourth inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2: 1 to 1:2.

In some embodiments, the fourth OSC material and the fourth inorganic oxide can have a weight ratio of no less than 2:1. In further embodiments, the fourth OSC material and the fourth inorganic oxide can have a weight ratio of no less than 10:1. In another further embodiments, the fourth OSC material and the fourth inorganic oxide can have a weight ratio of no less than 20:1 or no less than 30:1. In yet another further embodiments, the fourth OSC material and the fourth inorganic oxide can have a weight ratio of no less than 40:1 or no less than 50:1.

In some embodiments, the fourth catalytic region can extend for 100 percent of the axial length L. In other embodiments, the fourth catalytic region can be less than the axial length L, for example, no greater than 95%, 90%, 80%, or 70% of the axial length L.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

Preferably, the first catalyst region is a single washcoat layer disposed on the substrate. The single washcoat layer may be coated along the entire length of the substrate, or over only a portion thereof. For example, preferably, the single washcoat layer is coated from one end (e.g. the inlet end or the outlet end in terms of the direction of intended use in an exhaust system) of the substrate, preferably coating less than 90%, less than 80%, less than 70%, less than 60%, less than 50%, less than 40%, less than 30%, less than 20%, or less than 10% of the length of the substrate. Preferably, the single washcoat layer is coated directly on the substrate. In an alternative preferred embodiment, there is one or more intervening washcoat layers located between the single washcoat layer of the invention and the substrate. The one or more intervening washcoat layers in this embodiment may be any suitable washcoat layer known to the skilled person. Preferably, the one or more intervening washcoat layers may be suitable for three-way catalysis. In other words, the catalyst article preferably further comprises one or more further washcoat layers.

Preferably, the first catalyst region further comprises platinum and/or palladium. The platinum and/or palladium may be supported on a support material. Suitable support materials are known in the art.

Preferably, the catalyst article is for three-way catalysis. In other words, the catalyst article is preferably a TWC.

### Substrate

Preferably the substrate is a flow-through monolith. Alternatively, the substrate can be a wall-flow filter.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Preferably, the substrate comprises a wall flow filter substrate. In an alternative preferred embodiment, the substrate comprises a flow-through substrate. The substrate may be a "blank", i.e. un-washcoated, substrate. Alternatively, the substrate may have one or washcoats already loaded thereon. In such a situation, the final catalyst article may comprise multiple layers of different washcoats. The substrate preferably comprises cordierite. However, the composition of the substrate is not particularly limited.

In a further aspect, the present invention provides a method of manufacturing a catalyst article, the method comprising:
providing rhodium-supporting support material particles having rhodium supported thereon at a concentration of from 0.001 to 3.5 wt.%, based on the weight of the rhodium-supporting support material particle;
providing non-supporting support material particles having essentially no rhodium supported thereon, preferably having no rhodium supported thereon;
forming a washcoat comprising the rhodium-supporting support material particles and the non-supporting support material particles; and
coating a substrate with the washcoat to provide a catalyst article wherein the rhodium is present at a loading of up to 20 g/ft³ relative to the substrate.

Unless otherwise stated, the preferred features and embodiments relating to the first aspect, and in particular any preferred features of the rhodium-supporting support material particles, the non-supporting support material particles, the first and/or further catalyst regions, the support material particles in general, the substrate and the catalyst article as a whole, apply equally to this aspect.

Providing rhodium-supporting support material particles having rhodium supported thereon may comprise providing support material particles and supporting rhodium thereon. Such a method is known in the art and any suitable technique may be used.

Forming a washcoat comprising the rhodium-supporting support material particles and the non-supporting support material particles preferably comprises combining the rhodium-supporting support material particles and the non-supporting support material particles with water, in any order, to form a slurry. The term "slurry" as used herein may encompass a liquid comprising insoluble material, e.g. insoluble particles. The slurry is typically stirred, more typically for at least 10 minutes, more typically for at least 30 minutes, even more typically for at least an hour. Such washcoat preparation methods are known in the art, and the technique is not particularly limited.

Coating a substrate with the washcoat may be carried out using techniques known in the art. Typically, the washcoat may be poured into the inlet of the substrate using a specific moulding tool in a predetermined amount, thereby coating the washcoat on the substrate. Alternatively, coating a substrate with the washcoat may be carried out by immersing the substrate in the washcoat. Subsequent vacuum and/or air knife and/or drying steps may be employed during the coating step. When the substrate is a filter block, the washcoat may be coated on the filter walls, within the filter walls (if porous) or both.

It is essential that coating a substrate with the washcoat provides a catalyst article wherein the rhodium is present at a loading of up to 20 g/ft³ relative to the substrate. It is simple for the skilled person to plan the relative amounts of each component used in the method (e.g. of the washcoat and the substrate) accordingly in order to achieve such a desired rhodium loading.

Preferably, the rhodium-supporting support material particles have rhodium supported thereon at a concentration of from 0.3 to 3.5 wt.%, based on the weight of the rhodium-supporting support material particle.

The method preferably further comprises adding a binder to the washcoat prior to coating a substrate with the washcoat. Preferred binders are described elsewhere herein. Preferably, the method further comprises adding one or more of an acid, a base, a thickening agent and a reducing agent to the washcoat prior to coating a substrate with the washcoat.

Preferably, providing rhodium-supporting support material particles comprises supporting rhodium on support material particles using incipient wetness impregnation. Incipient wetness impregnation is a technique well-known to the skilled person. The skilled person would be able to perform an appropriate incipient wetness impregnation method without further direction.

Preferably, providing rhodium-supporting support material particles further comprises drying and calcining the rhodium-supporting support material particles. This drying and calcining step is preferably performed before formation of the washcoat.

After coating a substrate with the washcoat, the resulting catalyst article (or coated substrate) is preferably dried and/or calcined.

Preferably, the catalyst article of this aspect is according to the first aspect.

In a further aspect, the present invention provides a catalyst article obtained or obtainable by the method of the above aspect.

Surprisingly, when used in an emission treatment system, the catalyst article of this aspect, which has locally higher concentrations of rhodium as defined herein, but still a low overall loading of rhodium in order to reduce the use of PGMs, may exhibit significantly improved light-off performance {i.e. a lower light-off temperature, the temperature at which the conversion of a particular target species [NOₓ, CO or total hydrocarbon (THC)] reaches 50%} compared with catalyst articles not having locally higher concentrations of rhodium. Moreover, having the locally higher concentrations of rhodium while maintaining low overall rhodium loading may result in larger particle sizes of rhodium on the rhodium supporting support material particles, which may surprisingly result in a catalyst article in which the rhodium particles are more resistant to sintering, oxidation and migration compared to other low-rhodium-loading catalyst articles. However, it has also been found that over concentrating the rhodium on the rhodium-supporting support material particles may then result in a reduction in catalytic activity. As such, there may be an optimal local rhodium concentration for a particular low total loading of rhodium.

The above effects may be particularly beneficial for catalyst articles having low total rhodium loading but may not be observed for catalyst articles having a higher total rhodium loading. Without wishing to be bound by theory, it is thought that this may be because when the total loading of rhodium relative to the support is already high, the local concentration of rhodium on each of the support material particles is already high, and therefore there may not be a need to locally concentrate the rhodium on a portion of the support material.

In a further aspect, the present invention provides an emission treatment system comprising the catalyst article described herein. Preferably, the emission treatment system is for a gasoline engine. Preferably, the gasoline engine operates under stoichiometric conditions.

In a further aspect, the present invention provides a method of treating an exhaust gas, the method comprising: providing the catalyst article described herein; and contacting the catalyst article with an exhaust gas. Preferably, the exhaust gas is from a gasoline engine. Preferably, the gasoline engine operates under stoichiometric conditions.

The invention will now be described in relation to the following non-limiting examples.

### Manufacture of catalyst articles

A number of catalyst articles were prepared according to the following examples:

### Reference Catalyst 1

1. A pre-milled ceria zirconia mixed oxide (CZO) containing 20% ceria was slurried targeting 1.0 g/in³ loading.
2. A calculated amount of Rh nitrated was added to slurry (1), targeting 4 g/ft³ Rh metal.
3. Ammonia was added to the washcoat (2) to adjust pH to 7.
4. The slurry was blended with a 4% La₂O₃-Al₂O₃ slurry targeting 1.0 g/in³ loading. This was continuously mixed.
5. The solids were adjusted and the washcoat thickened.
6. A substrate was coated with the washcoat (5) targeting 50%-55% dose length from one side at first. Dried to 80% or greater moisture removal by hot air. Then coat the other side the substrate targeting to a 50%-55% dose length, followed by drying again and calcination.
7. Final catalyst contains 20% ceria containing CZO of 1.0 g/in³, 4% La₂O₃ - Al₂O₃ of 1.0 g/in³ and Rh metal of 4 g/ft³.

### Inventive Catalyst 1

1. A pre-milled CZO containing 20% ceria (same material used in Reference Catalyst 1 step 1) was slurried targeting 0.15 g/in³ loading.
2. A calculated amount of Rh nitrated was added to slurry (1), targeting 4 g/ft³ Rh metal.
3. Ammonia was added to the washcoat (2) to adjust pH to 7.
4. An extra quantity of CZO slurry of 0.86 g/in³ was added to make the total CZO equivalent to Reference Catalyst 1 (1.0 g/in³). The CZO material used in this step contains 20% ceria, same as Reference Catalyst 1 step 1. In this washcoat, however, Rh was locally concentrated on about 15.4% of the CZO support containing 20% CeO₂ and the rest of the CZO support is free of Rh. This was continuously mixed.
5. The slurry was blended with a 4% La₂O₃-Al₂O₃ slurry targeting 1.0 g/in³ loading. This was continuously mixed.
6. The solids were adjusted and the washcoat thickened.
7. A substrate was coated with the washcoat (6) targeting 50%-55% dose length from one side at first. Dried to 80% or greater moisture removal by hot air. Then coat the other side the substrate targeting to a 50%-55% dose length, followed by drying again and calcination.
8. Final catalyst contains 20% ceria containing CZO of 1.0 g/in³, 4% La₂O₃ - Al₂O₃ of 1.0 g/in³ and Rh metal of 4 g/ft³.

### Inventive Catalyst 2

1. A pre-milled CZO containing 30% Ceria was slurried targeting 0.15 g/in³ loading.
2. A calculated amount of Rh nitrated was added to slurry (1), targeting 4 g/ft³ Rh metal.
3. Ammonia was added to the washcoat (2) to adjust pH to 7.
4. An extra quantity of CZO slurry of 0.86 g/in³ was added to make the total CZO equivalent to Reference Catalyst 1 (1.0 g/in³). The CZO material used in this step contains 20% ceria, same as Reference Catalyst 1 step 1. In this washcoat, however, Rh was locally concentrated on about 15.4% of the CZO support containing 30% CeO₂ and the rest of the CZO support is free of Rh. This was continuously mixed.
5. The slurry was blended with a 4%La₂O₃-Al₂O₃ slurry targeting 1.0 g/in³ loading. This was continuously mixed.
6. The solids were adjusted and the washcoat thickened.
7. A substrate was coated with the washcoat (6) targeting 50%-55% dose length from one side at first. Dried to 80% or greater moisture removal by hot air. Then coat the other side the substrate targeting to a 50%-55% dose length, followed by drying again and calcination.
8. Final catalyst contains 30% Ceria containing CZO of 0.15 g/in³, 20% ceria containing CZO of 0.85 g/in³, 4% La₂O₃ - Al₂O₃ of 1.0 g/in³ and Rh metal of 4 g/ft³.

### Inventive Catalyst 3

1. A pre-milled CZO containing 45% ceria was slurried targeting 0.15 g/in³ loading.
2. A calculated amount of Rh nitrated was added to slurry (1), targeting 4 g/ft³ Rh metal.
3. Ammonia was added to the washcoat (2) to adjust pH to 7.
4. An extra quantity of CZO slurry of 0.86 g/in³ was added to make the total CZO equivalent to Reference Catalyst 1 (1.0 g/in³). The CZO material used in this step contains 20% ceria, same as Reference Catalyst 1 step 1. In this washcoat, however, Rh was locally concentrated on about 15.4% of the CZO support containing 45% CeO₂ and the rest of the CZO support is free of Rh. This was continuously mixed.
5. The slurry was blended with a 4% La₂O₃-Al₂O₃ slurry targeting 1.0 g/in³ loading. This was continuously mixed.
6. The solids were adjusted and the washcoat thickened.
7. A substrate was coated with the washcoat (6) targeting 50%-55% dose length from one side at first. Dried to 80% or greater moisture removal by hot air. Then coat the other side the substrate targeting to a 50%-55% dose length, followed by drying again and calcination.
8. Final catalyst contains 45% ceria containing CZO of 0.15 g/in³, 20% ceria containing CZO of 0.85 g/in³, 4% La₂O₃ - Al₂O₃ of 1.0 g/in³ and Rh metal of 4 g/ft³.

### EXAMPLE 1: HOT RDE TEST IN ENGINE TESTING

Reference Catalyst 1 and Inventive Catalysts 1, 2 and 3 were engine bench aged for 50 hours with a stoic/fuel cut aging cycle, targeting a peak catalyst bed temperature of 1000 °C. The catalysts were tested using a 2.0 L engine bench dynamometer performing a bespoke OEM designed real-world driving (RDE) cycle comprising acceleration and fuel shut-off conditions representing a cold urban, motorway and hot urban speed phases. The cycle length was 2700 seconds from ambient-soaked conditions, reaching an approximate peak catalyst bed temperature of 650 °C and 250 kg/h mass air flow rate. A cold RDE test was used as the precondition cycle. After that, three Hot RDE cycles were repeated with a 5-minute soak time in between. While the engine is at operating temperature, but the catalyst bed temperature is still hot. The advantage of running hot RDE with a cold RDE as pre-con is the very good reproducibility of Engine out emissions. NOₓ, CO and THC emissions at pre- and post- catalyst position were measured, and accumulated mass of each species was calculated across the cycle. To avoid the inconsistency of Engine out emission from run to run, Cumulative Conversion was further calculated by comparing the cumulative mass of the pre- catalyst emission and the cumulative mass at the outlets of the catalysts. The value of three hot RDE runs against time are plotted and shown in the figures below.

**FIG. 7a** compares the NOₓ Cumulative conversion of Reference Catalyst 1 and Inventive Catalysts 1-3 during the hot RDE cycle. All Inventive Catalysts of the present invention exhibit significantly improved performance compared with Reference Catalyst 1, which revealing more than 10% higher NOₓ conversion at the end of the cycle. The increased size of Rh particles at 1.5% Rh local concentration may therefore be more resistant to sintering, migration or segregation of Rh cations into CeO₂ lattice, resulting the higher NOₓ cumulative conversions.

Among the three Inventive Catalysts, Inventive Catalyst 2 gave the highest conversion throughout the entire testing cycle. High surface energy of CeO₂ favors metal-support interaction. Therefore, the higher ceria in CZO, the stronger Rh-support interaction. However, too much ceria in CZO also causes the dissolution of Rh into the bulk ceria after high temperature treatment. 30% ceria-content of CZO in Inventive Catalyst 2 may therefore provide the optimal metal support interactions. Lower ceria-CZO in Inventive Catalyst 1 or higher ceria-CZO in Inventive Catalyst 3, however, deteriorate the catalytic activity, although still higher than Reference Catalyst 1. CO and THC emissions are shown in **FIG. 7b** and **FIG.** 7c, respectively. Inventive Catalyst 1 to 3 all clearly showed substantially improved performance compared with Reference Catalyst 1, possibly due to optimal size of Rh particles which may be more resistant to sintering and migration. Again, lower ceria-CZO in Inventive Catalyst 1 or higher ceria-CZO in Inventive Catalyst 3, however, however, starts to decrease the conversions of CO and THC compared to Inventive Catalyst 2, due to sub-optimal Rh-support interaction.

### EXAMPLE 2: LIGHT OFF PERFORMANCES TEST IN ENGINE TESTING

All catalysts were engine bench aged for 100 hours with stoic/fuel cut aging cycles targeting peak temperature of catalyst bed at 1000 °C and tested over a gasoline engine. The light-off performance is a typical condition with a gas volumetric space velocity of 216 K/hr, temperature ramp is 20 °C/min, the lambda of Air and Fuel Ratio (AFR) is perturbed at 14.56 with 0.5 amplitude and 1Hz frequency. The catalyst inlet temperature is reduced until THC, CO and NOₓ conversions are less than 10%. Stabilize for 2 Minutes. Catalyst inlet temperature is increased 20 °C per minute until inlet temperature reaches 500C. The conversions of NOₓ, CO, THC were calculated by comparing the concentration of the feed gas and the gas at the outlets of the catalysts.

T₅₀ is the temperature when the conversion reaches 50%, which is typically used to compare catalytic performances. The lower T₅₀, the better the catalyst. The T₅₀ light off temperatures of all catalysts are listed in **Table 1.** The data show clearly that all Inventive Catalyst 1 to 3 of the present invention give significantly improved light-off performance compared with the Reference Catalyst 1. The optimal size of Rh particles at 1.5% Rh local concentration may therefore be more resistant to sintering, migration or dissolution into bulk ceria lattice, resulting early light-off performance. Inventive Catalysts 1 and 2 both exhibit - 65 °C lower T₅₀ for NOₓ, ~80 °C lower T₅₀ for CO and ~ 45 °C lower T₅₀ for THC, respectively. Too high ceria content in CZO in Inventive Catalyst 3, however, starts to deteriorate the catalytic activity, with a ~ 25 °C delay of all the three pollutants conversion when compared to Inventive Catalysts 1 and 2, although still improved compared to Reference Catalyst 1.

**Table 1: Engine Bench Light-Off Test Results**

| Catalysts | Rh-containing CZO | | Rh - free CZO | | T₅₀ (°C) NOₓ | T₅₀ (°C) CO | T₅₀ (°C) THC |
|---|---|---|---|---|---|---|---|
| | Loading (g/in³) | Ceria content | Loading (g/in³) | Ceria content | | | |
| **Reference Catalyst 1** | 1.0 | 20 | - | - | 390 | 402 | 404 |
| Inventive Catalyst 1 | 0.15 | 20 | 0.85 | 20 | 325 | 324 | 359 |
| Inventive Catalyst 2 | 0.15 | 30 | 0.85 | 20 | 325 | 324 | 359 |
| Inventive Catalyst 3 | 0.15 | 45 | 0.85 | 20 | 350 | 350 | 385 |

### Reference Catalyst 2

*Bottom layer front zone washcoat slurry was prepared by:*
1. Mixed a solution of palladium nitrate and diluted barium acetate solution.
2. Added taurine to the mixed solution (i) above and keep mixing,
3. Milled and made a slurry containing 4% La₂O₃ doped alumina separately.
4. Added the pre-solution in step (2) to the pre-milled 4% La₂O₃-doped alumina slurry (3) and kept mixing.
5. Milled and made a slurry containing a ceria and zirconia mixed oxide separately.
6. Added the resulting ceria zirconia mixed oxide slurry (5) to the batch at step (4),
7. Thickened the washcoat slurry in (6) with rheology modifier.

The final compositions of the bottom layer front zone washcoat contained ceria zirconia composite 0.4 g/in³, 4% La₂O₃-doped alumina 0.8 g/in³, Ba element 150 g/ft³, and Pd element 9 g/ft³.

*Bottom layer rear zone washcoat slurry was prepared by:*
1. A pre-milled CZO containing 5% ceria was slurried targeting 1.5 g/in³ loading.
2. A calculated amount of Rh nitrated was added to slurry (1), targeting 10 g/ft³ Rh metal.
3. Ammonia was added to the washcoat (2) to adjust pH to 7.
4. The slurry was blended with a 4% La₂O₃-Al₂O₃ slurry targeting 0.5 g/in³ loading. This was continuously mixed.
5. The solids were adjusted and the washcoat thickened.

The final compositions of the bottom layer rear zone washcoat contained ceria zirconia composite 1.5 g/in³ in total, 4% La₂O₃-doped alumina 0.5 g/in³ and Rh element 10 g/ft³.

*Top layer front zone washcoat was prepared by:*
1. Milled a ceria and zirconia mixed oxide.
2. Milled a slurry containing 4%La₂O₃ doped alumina, separately.
3. Blended the two slurries (1) and (2) above.
4. Added palladium nitrate to the slurry (3) for mixing.
5. Added gallic acid and kept mixing.
6. Added barium sulfate powder and continuously mixed.
7. Adjusted pH to 7.0 or above
8. Thickened the washcoat (7) with rheology modifier.

The final compositions of the top layer front zone washcoat contained ceria zirconia composite 0.4 g/in³, 4% La₂O₃-doped alumina 0.8 g/in³, Ba element 150 g/ft³, and Pd element 131 g/ft³.

### Washcoat Coating on a flow through monolithic substrate:

1. Use precision coating method with the bottom layer front zone dose first to 75%-80% dose length. Dry to 80% or greater moisture removal.
2. Calcine.
3. Coat the bottom layer rear zone washcoat to a 75%-80% dose length target. Dry to 80% or greater moisture removal.
4. Apply the top layer front zone by precision coating method targeting 30% to 35% dose length. Drying to 80% moisture removal or greater.
5. Calcine again.

### Inventive Catalyst 4

*Bottom layer front zone washcoat slurry was prepared the same way as Reference Catalyst 2.*

*Bottom layer rear zone washcoat slurry was prepared by:*
1. A pre-milled CZO containing 5% ceria was slurried targeting 0.56 g/in³ loading.
2. A calculated amount of Rh nitrated was added to slurry (1), targeting 10 g/ft³ Rh metal.
3. Ammonia was added to the washcoat (2) to adjust pH to 7.
4. An extra quantity of CZO slurry of 0.94 g/in³ was added to make the total CZO equivalent to Reference Catalyst 2 (1.5 g/in³). The CZO material used in this step contains 5% ceria, same as Reference Catalyst 2 step 1. In this washcoat, however, Rh was locally concentrated on about 37.3% of the CZO support containing 5% CeO₂ and the rest of the CZO support is free of Rh. This was continuously mixed.
5. The slurry was blended with a 4% La₂O₃-Al₂O₃ slurry targeting 0.5 g/in³ loading. This was continuously mixed.
6. The solids were adjusted and the washcoat thickened.

The final compositions of the bottom layer rear zone washcoat contained ceria zirconia composite 1.5 g/in³ in total, 4% La₂O₃-doped alumina 0.5 g/in³ and Rh element 10 g/ft³. All the ceria zirconia composite material contains 5% ceria.

*Top layer front zone washcoat was prepared the same way as Reference Catalyst 2.*

*Washcoat Coating on a flow through monolithic substrate was the same way as Reference Catalyst 2.*

### Inventive Catalyst 5

*Bottom layer front zone washcoat slurry was prepared the same way as Reference Catalyst 2.*

*Bottom layer rear zone washcoat slurry was prepared by:*
1. A pre-milled CZO containing 30% ceria was slurried targeting 0.56 g/in³ loading.
2. A calculated amount of Rh nitrated was added to slurry (1), targeting 10 g/ft³ Rh metal.
3. Ammonia was added to the washcoat (2) to adjust pH to 7.
4. An extra quantity of CZO slurry of 0.94 g/in³ was added to make the total CZO equivalent to Reference Catalyst 2 (1.5 g/in³). However, the CZO material used in this step contains 30% Ceria. In this washcoat, Rh was locally concentrated on about 37.3% of the CZO support containing 30% CeO₂ and the rest of the CZO support is free of Rh. This was continuously mixed.
5. The slurry was blended with a 4% La₂O₃-Al₂O₃ slurry targeting 0.5 g/in³ loading. This was continuously mixed.
6. The solids were adjusted and the washcoat thickened.

The final compositions of the bottom layer rear zone washcoat contained ceria zirconia composite 1.5 g/in³ in total, 4% La₂O₃-doped alumina 0.5 g/in³ and Rh element 10 g/ft³. All of ceria zirconia composite material contains 30% Ceria.

*Top layer front zone washcoat was prepared the same way as Reference Catalyst 2.*

*Washcoat Coating on a flow through monolithic substrate was the same way as Reference Catalyst 2.*

### EXAMPLE 3: LIGHT OFF PERFORMANCES TEST IN ENGINE TESTING

All catalysts were engine bench aged for 108 hours with stoic/fuel cut aging cycles targeting peak temperature of catalyst bed at 1000 °C and tested over a gasoline engine. The light off performance is a typical condition with a gas volumetric space velocity of 95 K/hr, temperature ramp is 10 °C/min, the lambda of Air and Fuel Ratio (AFR) is perturbed at 14.55 with 0.5 amplitude. The conversion of NOx, CO and THC were calculated by comparing the concentration of the feed gas and the gas at the outlets of the catalysts and T₅₀ is defined by the temperature when 50% conversion of a pollutant is achieved. The lower T₅₀ temperature, the better the catalyst.

The NOₓ, CO and THC T₅₀ light off temperatures are shown in **Table 2.** The data indicates clearly that both Inventive Catalyst 4 and Inventive Catalyst 5 of the present invention showed significantly improved light-off performance when compared with Reference Catalyst 2. Typically, the rear portion of the catalyst brick has more impact on the Light-off function of a TWC catalyst. Thus, application of the Rh partitioning technology in bottom layer rear zone in this catalyst design undoubtedly demonstrated this benefit with Inventive Catalyst 4 showing 17 ~ 22 °C lower T₅₀ than Reference Catalyst 2. The optimal size of Rh particles at 1.0% Rh local concentration may therefore be more resistant to sintering, migration or dissolution into bulk ceria lattice, resulting early light-off performance. In particular, Inventive Catalyst 5 is even more active than Inventive Catalyst 4 with a few degrees lower of all the T₅₀ₛ. It could also be that 30% ceria-content of CZO in Inventive Catalyst 5 may therefore provide the stronger metal support interactions than 5% ceria in Inventive Catalyst 4. More OSC capacity is another contributor for earlier light-off activity. Obviously, Inventive Catalyst 5 has higher OSC capacity due to 30% ceria - contenting CZO usage.

**Table 2: Engine Bench Light Off Test Results**

| Catalysts | Rh-containing CZO | | Rh - free CZO | | T₅₀ (°C) NOₓ | T₅₀ (°C) CO | T₅₀ (°C) THC |
|---|---|---|---|---|---|---|---|
| | Loading (g/in³) | Ceria content | Loading (g/in³) | Ceria content | | | |
| **Reference Catalyst 2** | 1.5 | 5 | - | - | 364 | 368 | 372 |
| Inventive Catalyst 4 | 0.56 | 5 | 0.94 | 5 | 346 | 346 | 355 |
| Inventive Catalyst 5 | 0.56 | 30 | 0.94 | 30 | 342 | 344 | 348 |

### EXAMPLE 4: WARM-UP TEST IN ENGINE TESTING

All catalysts were engine bench aged for 108 hours with stoic/fuel cut aging cycles targeting peak temperature of catalyst bed at 1000 °C and tested over a gasoline engine. The warm-up test was typically conducted at 95K gas hourly space velocity. Pollutants from the engine out were pre-heated to 490° C then directed to the cold catalyst. Time to reach 50% conversion of total hydrocarbon, carbon monoxide and NOₓ were recorded and named T₅₀HC, T₅₀CO and T₅₀NOₓ, respectively. The conversion of THC, CO and NOₓ were calculated by comparing the concentration of the feed gas and the gas at the outlets of the catalysts.

The data in **Table 3** indicate clearly that both Inventive Catalyst 4 and Inventive Catalyst 5 of the present invention warm up a little bit faster than Reference Catalyst 2 and there is no noticeable difference between Inventive Catalyst 4 and 5. Previous study shows that the front zone of the TWC catalyst has more impact on the Warm Up performance than the rear zone. Thus, it is not surprised that the Warm Up activities of all the catalysts are quite similar when modifying the Rh - containing rear zone only.

**Table 3: Engine Bench Warm Up Test Results**

| Catalysts | Rh-containing CZO | | Rh - free CZO | | T₅₀ (Sec) NOₓ | T₅₀ (Sec) CO | T₅₀ (Sec) THC |
|---|---|---|---|---|---|---|---|
| | Loading (g/in³) | Ceria content | Loading (g/in³) | Ceria content | | | |
| **Reference Catalyst 2** | 1.5 | 5 | - | - | 8.2 | 7.2 | 9.1 |
| Inventive Catalyst 4 | 0.56 | 5 | 0.94 | 5 | 7.4 | 6.9 | 8.7 |
| Inventive Catalyst 5 | 0.56 | 30 | 0.94 | 30 | 7.8 | 7.0 | 8.7 |

### Reference Catalyst 3

*Bottom layer front zone washcoat was prepared by:*
1. Milled and made a slurry containing 4% La₂O₃ doped alumina.
2. Milled and made a slurry containing a ceria and CZO.
3. Blended the two slurries together.
4. Added barium hydroxide and palladium nitrate to the slurry (3)
5. Added tannic acid to the slurry (4)
6. Adjusted the solids of the washcoat (5) and thickened it with rheology modifier.
7. The final compositions of the bottom layer washcoat contained La-Al₂O₃ 1.0g/in³, ceria zirconia composite 1.0 g/in³, Ba element 400 g/ft³, and Pd element 31 g/ft³.

*Bottom layer rear zone washcoat was prepared by:*
1. Milled and made a slurry containing 4% La₂O₃ doped alumina.
2. Milled and made a slurry containing a ceria and CZO.
3. Blended the two slurries together.
4. Add platinum nitrate to the slurry (3).
5. Adjust the solids of the washcoat (4) and thicken it with rheology modifier.
6. The final compositions of the bottom layer washcoat contains La-Al₂O₃ 1.0g/in³, ceria zirconia composite 1.0 g/in³, and Pt element 28 g/ft³.

*Top layer washcoat was prepared by:*
1. Milled and made a slurry containing La-stabilized alumina (La-Al₂O₃).
2. A calculated amount rhodium nitrate solution and platinum nitrate solution were added to the slurry (1), targeting 1.0 g/in³ of La-Al₂O₃ ,5 g/ft³ Rh and 2.4 g/ft³Pt, respectively.
3. pH of the slurry (2) was increased to 6 ~ 7 with ammonia, resulting the Rh local concentration of 0.29%.
4. The slurry (3) was blended with a pre-milled Ceria-Zirconia mixed oxide (CZO) slurry, targeting 1.0 g/in³ loading. This was continuously mixed. The CZO material used in this step contains 40% Ceria.
5. The solids of the washcoat (4) were adjusted and thickened with rheology modifier.
6. The final compositions of the top layer washcoat contain 4% La₂O₃-doped alumina 1.0g/in³, ceria zirconia composite 1.0 g/in³, and Rh element 5 g/ft³, where the CZO material used contained 40% of ceria.

### Washcoat Coating on a flow through monolithic substrate:

1. Use precision coating method with the bottom layer front zone dose first to 50%-55% dose length. Dry to 80% or greater moisture removal.
2. Coat the bottom layer rear zone washcoat to a 50%-55% dose length target. Dry to 80% or greater moisture removal.
3. Calcine.
4. Apply the top layer washcoat from front zone by precision coating method targeting 50% to 55% dose length. Drying to 80% moisture removal or greater.
5. Apply the top layer washcoat from rear zone by precision coating method targeting 50% to 55% dose length. Drying to 80% moisture removal or greater.
6. Calcine again.

### Inventive Catalyst 6 with a zoned configuration in top layer

Bottom layer washcoat was prepared and coated the same way as Reference Catalyst 3 bottom layer.

Top layer of Inventive Catalyst 6 has a zoned configuration.

The inlet zone washcoat was prepared by:
1. Milled and made a slurry containing CZO. The CZO material used in this step contains 40% ceria, same as Reference Catalyst 3 step 4.
2. A calculated amount rhodium nitrate solution was added to the slurry (1), targeting 0.65 g/in³ of CZO and 5 g/ft³ Rh, respectively.
3. pH of the slurry (2) was increased to 6 ~ 7 with ammonia.
4. The slurry (3) was blended with a pre-milled La-Al₂O₃ slurry, targeting 0.65 g/in³ loading. This was continuously mixed.
5. The solids of the washcoat (5) were adjusted and thicken with rheology modifier.
6. The final compositions of the top layer inlet zone washcoat contained 4% La₂O₃-doped alumina 0.65 g/in³, ceria zirconia composite 0.65 g/in³, and Rh element 5 g/ft³. The Washcoat loading was 35% less than the Reference Catalyst 3.

The outlet zone washcoat was prepared by:
1. Milled and made a slurry containing CZO. The CZO material used in this step contains 40% ceria, same as Reference Catalyst 3 step 4.
2. A calculated amount rhodium nitrate solution was added to the slurry (1), targeting 0.19 g/in³ of CZO and 5 g/ft³ Rh, respectively.
3. pH of the slurry (2) was increased to 6 ~ 7 with ammonia.
4. An extra quantity of CZO slurry of 0.46 g/in³ was added to make the total CZO equivalent to top layer inlet zone (0.65 g/in³). In this washcoat, Rh was locally concentrated on about 41.3% of the CZO support containing 40% CeO₂ and the rest of the CZO support is free of Rh. This was continuously mixed.
5. The slurry (4) was blended with a pre-milled La-Al₂O₃ slurry, targeting 0.65 g/in³ loading. This was continuously mixed.
6. The solids of the washcoat (5) were adjusted and thicken with rheology modifier.
7. The final compositions of the top layer inlet zone washcoat contained 4%La₂O₃-doped alumina 0.65g/in³, ceria zirconia composite 0.65 g/in³, and Rh element 5 g/ft³. The Washcoat loading was 35% less than the Reference Catalyst 3.

### EXAMPLE 5: COLD RDE TEST IN ENGINE TESTING

All catalysts were engine bench aged for 100 hours with a stoic/fuel cut aging cycle, targeting a peak catalyst bed temperature of 1000 °C. The catalysts were tested using a 2.0 L bi-turbo, 4-cylinder, Eu(VI)b-calibrated engine bench dynamometer performing a bespoke OEM designed real-world driving (RDE) cycle comprising acceleration and fuel shut-off conditions representing a cold-start urban, motorway and hot urban speed phases. The cycle length was 2700 seconds from ambient-soaked conditions, reaching an approximate peak catalyst temperature of 700 °C, at ~140 km/hr vehicle speed and ~400 kg/hr mass air flow rate. NOₓ, CO and THC emissions at post catalyst position were measured and accumulated mass of each species was calculated across the cycle. Three runs were conducted on each catalyst formulation, and the cumulative mass of each pollutant species of three runs against time are plotted and shown in the figures below.

**FIG. 8a** is the NOₓ emission of Reference Catalyst 3 and Inventive Catalyst 6 during the cold RDE cycle. Inventive Catalyst 6 with zoned configuration having 1.5% Rh concentrated on CZO material in the rear zone gives the similar NOₓ emission across the entire cold RDE driving cycle to the Reference Catalyst 4, although the washcoat loading is 35% thrifted. CO and THC emission are shown in **FIG. 8b** and **FIG. 8c****,** respectively. Although there are some variations from run to run, Inventive Catalyst 6 with 35% less washcoat loading still behave very closely to the reference for either CO or THC emission control.

## Claims

1. A catalyst article for treating exhaust gas comprising:
a substrate comprising an inlet end and an outlet end with an axial length L;
a first catalytic region comprising support material particles;
at least some of the support material particles are rhodium-supporting support material particles having rhodium supported thereon at a concentration of from 0.001 to 3.5 wt.%, based on the weight of the rhodium-supporting support material particle;
the rhodium is present at a loading of up to 20 g/ft³ relative to the first catalytic region;
the support material particles comprise a ceria-zirconia mixed oxide; and wherein the ceria-zirconia mixed oxide has a ceria content of at least 20 wt.%.

2. The catalyst article of claim 1, wherein at least some of the support material particles are non-supporting support material particles having essentially no rhodium supported thereon, preferably having no rhodium supported thereon.

3. The catalyst article of claim 1 or claim 2, wherein from 5 to 80% of the support material particles in the first catalyst region are rhodium-supporting support material particles.

4. The catalyst article of any preceding claim, wherein the ceria-zirconia mixed oxide has a ceria content of no more than 45 wt.%.

5. The catalyst article of any preceding claim, wherein the ceria-zirconia mixed oxide is doped.

6. The catalyst article of any preceding claim, wherein the rhodium is present at a loading of from 1 to 20 g/ft³ relative to the first catalytic region.

7. The catalyst article of any preceding claim, wherein the support material particles are present at a loading of from 0.5 to 3 g/in³.

8. The catalytic article of any preceding claim, further comprising a second catalytic region.

9. The catalytic article of claim 8, wherein the second catalytic region comprises a second PGM component, a second OSC material, and/or a second inorganic oxide.

10. The catalytic article of claim 9, wherein the second PGM component is selected from the group consisting of platinum, palladium, rhodium, and a mixture thereof.

11. The catalytic article of any one of claims 8-10, further comprising a third catalytic region.

12. The catalytic article of claim 11, wherein the third catalytic region comprises a third PGM component, a third OSC material, and/or a third inorganic oxide.

13. The catalytic article of claim 12, wherein the third PGM component is selected from the group consisting of platinum, palladium, rhodium, and a mixture thereof.

14. The catalyst article of any preceding claim, wherein the first catalyst region further comprises platinum and/or palladium.

15. The catalyst article of any preceding claim for three-way catalysis.
